Europäisches Patentamt

European Patent Office

Office européen des brevets

(11) Veröffentlichungsnummer: **0 190 437**
**A1**

# (12) EUROPÄISCHE PATENTANMELDUNG

(21) Anmeldenummer: 85115691.9

(22) Anmeldetag: 10.12.85

(51) Int. Cl.⁴: **H 02 B 13/02**

(30) Priorität: 01.02.85 DD 272982

(43) Veröffentlichungstag der Anmeldung:
13.08.86 Patentblatt 86/33

(84) Benannte Vertragsstaaten:
AT CH DE FR LI NL SE

(71) Anmelder: VEB "Otto Buchwitz"
Starkstrom-Anlagenbau Dresden
Industriegelände Postschliessfach 360
DDR-8060 Dresden(DD)

(72) Erfinder: Müller, Ottmar, Prof. Dr.-Ing.
Kottmeierstrasse 28
DDR-1160 Berlin(DD)

(72) Erfinder: Böhme, Klaus, Dr. Ing.
Bodenbacher Strasse 135a
DDR-8045 Dresden(DD)

(72) Erfinder: Keller, Werner, Dr.-Ing.
Plattleite 60
DDR-8051 Dresden(DD)

(72) Erfinder: Seibt, Günter, Ing.
Ho-Chi-Minh-Strasse 14
DDR-8027 Dresden(DD)

(72) Erfinder: Sieber, Klaus, Dr.-Ing.
Semperstrasse 17
DDR-8020 Dresden(DD)

(74) Vertreter: Patentanwälte Beetz sen. - Beetz jun. Timpe -
Siegfried - Schmitt-Fumian
Steinsdorfstrasse 10
D-8000 München 22(DE)

(54) Metallgekapselte gasisolierte Schaltanlage.

(57) Bei dieser Schaltanlage sind die die hintereinander angeordneten Anlagenelemente, wie Leistungsschalter, Trenner (9), Kurzschließer, Erder (15), Sammelschienen (13) usw. aufnehmenden Kapselungen (2; 10; 14) durch die die Leiter der Strombahn führenden, aus Isolierstoff bestehenden Abstandshalter zugleich abgeschottet.

Zwecks Reduzierung der Ausfallzeit des Betriebsgeschehens von gasisolierten Schaltanlagen bei der Beseitigung von Störungen oder bei der Vornahme von Wartungsarbeiten auf ein Minimum, so daß diese in allen technischen Bereichen zur Versorgung eingesetzt werden können, sind die die Leiterausgänge (6; 6'; 6''; 7; 7'; 7'') aus jeder ein Anlagenelement aufnehmenden gasisolierten Kapselung (2; 10; 14) führenden Abstandshalter als aus einer Feststoffisolation bestehende, in die gasisolierte Kapselung (2; 10; 14) hineinragende Durchführung (4; 4'; 4''; 5; 5'; 5'') ausgebildet, und die durch die Durchführungen (4; 4'; 4''; 5; 5'; 5'') geführten Leiterausgänge (6; 6'; 6''; 7; 7'; 7'') an den sich gegenüberstehenden Enden benachbarter gasisolierter Kapselungen (2; 10; 14) miteinander gefügt.

1

## Metallgekapselte gasisolierte Schaltanlage

Die Erfindung betrifft eine metallgekapselte gasisolierte
Schaltanlage, deren Anlagenelemente, wie Leistungsschalter, Trenner, Kurzschließer, Erder, Sammelschienen usw.,
hintereinander angeordnet sind, wobei die die Anlagenelemente aufnehmenden Kapselungen durch die die Leiter
der Strombahn führenden, aus Isolierstoff bestehenden
Abstandshalter zugleich abgeschottet sind.

Metallgekapselte gasisolierte Schaltanlagen in allen
Spannungsbereichen über 6kV sind in den vielfältigsten
Ausführungen bekannt. Dabei sind die Anlagenelemente,
wie Leistungsschalter, Trenner, Kurzschließer, Erder,
Stromschienen usw. derartiger Schaltanlagen kraftschlüssig
hintereinander angeordnet, wodurch eine durchgängige
äußere Kapselung entsteht. Die die jeweiligen Anlagenelemente aufnehmenden Kapselungen sind durch die Leiter
der Strombahn tragende, aus Isolierstoff bestehende Abstandshalter voneinander getrennt, indem sie zwischen den
Flanschen der Kapselungen mit verschraubt bzw. eingeklemmt
sind. Um einen großen Kriechweg zwischen den durch die
Abstandshalter zu tragenden Leitern und der Kapselung zu
erreichen, sind die Abstandshalter, wie beispielsweise
der DE-PS 1 615 857, H 02 B, 13/02 zu entnehmen ist,
konusförmig ausgebildet. Damit erfüllen diese Abstandshalter nicht nur die Aufgabe, daß sie die Leiter der Strombahn tragen, sondern sie erfüllen zugleich auch eine
Schottfunktion für das Isolierglas zwischen benachbarten
Gasräumen bzw. benachbarten Anlagenelementen. Diese raumsparende Bauweise der metallgekapselten gasisolierten
Schaltanlage unter Berücksichtigung der konusförmigen
Abstandshalter ist jedoch gleichzeitig mit dem Nachteil
behaftet, daß bei Beseitigung von Störungen oder bei der
Vornahme von Wartungsarbeiten, also beim Ausbau eines
Anlagenelementes, stets die beiden benachbarten Gasräume
mit geöffnet werden müssen, so daß also immer drei Gasräume von drei ein Anlagenelement aufnehmenden Kapselungen entleert und nach der Montage wieder getrocknet und
gefüllt werden müssen. Das aber ist ein langwieriger,
mehrere Tage dauernder Prozeß, der die Ausfallzeit des
Betriebsgeschehens bestimmt. Aus diesem Grunde sind gasisolierte Schaltanlagen, insbesondere zur Versorgung von
technologischen Prozessen, die nur wenige Stunden Unterbrechung erlauben, nicht geeignet.

Hier will die Erfindung Abhilfe schaffen. Die Erfindung,
wie sie in den Ansprüchen gekennzeichnet ist, löst die
Aufgabe, eine metallgekapselte gasisolierte Schaltanlage
zu schaffen, bei der die die Anlagenelemente aufnehmenden
Kapselungen abschottenden, die Leiter der Strombahn tragenden Abstandshalter so auszubilden sind, daß ohne Beeinflussung von benachbarten Gasräumen eine separate Demontage des betroffenen einzelnen Anlagenelementes ermöglicht
wird, dadurch, daß die die Leiterausgänge aus jeder ein
Anlagenelement aufnehmenden gasisolierten Kapselung führenden Abstandshalter als aus einer Feststoffisolation
bestehende, in die gasisolierte Kapselung hineinragende
Durchführung ausgebildet und die durch die Durchführungen
geführten Leiterausgänge an den sich gegenüberstehenden
Enden benachbarter gasisolierter Kapselungen miteinander
gefügt sind. Dabei sind die die Leiterausgänge der Strombahn führenden Durchführungen durch an sich bekannte, die Leiterausgänge leitend verbindende Einrichtungen miteinander lösbar verbunden, wobei diese Verbindung durch in der Starkstromtechnik zur Anwendung kommende Montageverbindungen bei der Verbindung von Leitern erfolgen kann.

In weiterer Ausgestaltung der Erfindung ist an den die Leiterausgänge der Strombahn führenden, in die gasisolierten Kapselungen hineinragenden Durchführungen innerhalb einer jeden gasisolierten Kapselung das jeweilige Anlagenelement bzw. zumindest eine Baugruppe des jeweiligen Anlagenelementes befestigt. Das heißt also, daß bei Aufnahme eines Leistungsschalters durch die gasisolierte Kapselung an den Durchführungen die gesamte Schaltkammer befestigt ist, oder aber bei Aufnahme eines Trenners an der einen Durchführung der feststehende Kontakt, während an der anderen Durchführung das Trennmesser befestigt ist.

Ausgehend vom Grundgedanken dieser Erfindung ist schließlich nach einem weiteren Merkmal der Erfindung der Leiterausgang des im Eingangsteil der metallgekapselten gasisolierten Schaltanlage angeordneten feststoffisolierten Meßwandlers ebenfalls als aus einer Feststoffisolation bestehende, den Leiterausgang aufnehmende, in die anschließende gasisolierte Kapselung hineinragende Durchführung ausgebildet.

Im folgenden wird die Erfindung anhand von einer ein Ausführungsbeispiel darstellenden Zeichnung näher erläutert.

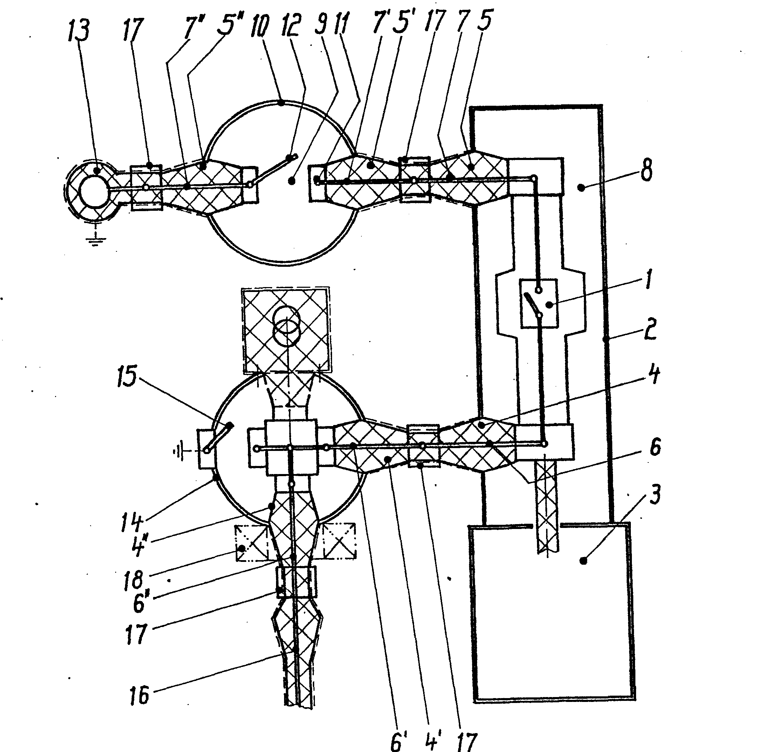

In der Zeichnung ist eine Einfach-Sammelschienen-Schaltanlage dargestellt. Dabei ist die Schaltkammer 1 des Leistungsschalters sowie die die Schaltkammer 1 aufnehmende gasisolierte Kapselung 2, die gleichzeitig den Antrieb 3 für den Leistungsschalter trägt, an den aus einer Feststoffisolation bestehenden, in die gasisolierte Kapselung 2 hineinragenden Durchführungen 4; 5 befestigt.

Damit tragen diese Durchführungen 4; 5 nicht nur den
Leistungsschalter sowie die Leiterausgänge 6; 7 der Strombahn, sondern sie schließen auch den Gasraum 8 zur Umwelt
ab. In analoger Weise ist der Stromschienentrenner 9 innerhalb der gasisolierten Kapselung 10 angeordnet, d. h., der
feststehende Kontakt 11 ist an der den Leiterausgang 7'
führenden Durchführung 5' befestigt, während das Trennmesser 12 an der den Leiterausgang 7" führenden Durchführung 5" befestigt ist, Dieser Leiterausgang 7" ist an
der Sammelschiene 13 angeschlossen. Völlig gleichartig
ist der Eingangsteil der Einfach-Sammelschienen-Schaltanlage ausgebildet. Das bedeutet, daß die gasisolierte
Kapselung 14 nicht nur den Eingangserder 15 aufnimmt,
sondern auch den hineinragenden Teil der den Leiterausgang 6' führenden Durchführung 4' sowie den hineinragenden
Teil der den Leiterausgang 6" führenden Durchführung 4",
die zu dem Kabel 16 führt. An den jeweils sich gegenüberstehenden Enden der die Leiterausgänge 6; 6' und 7; 7'
führenden, aus einer Feststoffisolation bestehenden Durchführungen 4; 4' und 5; 5' ist jeweils eine Montageverbindung 17 vorgesehen, über die die Durchführungen 4; 4' und
5; 5' lösbar miteinander verbunden sind. Da derartige
Montageverbindungen 17 aber auch zwischen der Sammelschiene13 und der das Trennmesser 12 tragenden Durchführung 5" sowie zwischen dem Kabel 16 und der Durchführung 4" vorgesehen sind, die in die gasisolierte
Kapselung 14 hineinragt, besteht nunmehr die Möglichkeit,
über die Montageverbindung 17 eine Trennung der Anlagenelemente außerhalb der gasisolierten Kapselungen 2; 10;
14 vorzunehmen. Das aber bedeutet, daß eine Montage bzw.
Demontage in keinem Falle in den Gasraum eines benachbarten
Anlagenelementes eingreift. Somit ist ein Gasaufbau auch
in dem demontierten Anlagenelement nicht erforderlich. Die
Montage bzw. Demontage beschränkt sich lediglich auf das
Lösen der jeweiligen Montageverbindungen 17, was in wenigen
Stunden statt in Tagen gemäß den herkömmlichen gasisolierten Schaltanlagen möglich ist. Diese Vorteile bleiben auch dann erhalten, wenn die Sammelschiene 13 ebenfalls in gasisolierter Ausführung gestaltet ist. Ausgehend von dem im Eingangsteil der gasisolierten Schaltanlage angeordneten feststoffisolierten Meßwandler 18 kann die den Leiterausgang 6" führende Durchführung 4" auch durch die Feststoffisolation des Meßwandlers 18 mit seinem Leiterausgang gebildet werden.

Patentansprüche

1. Metallgekapselte gasisolierte Schaltanlage, deren Anlagenelemente, wie Leistungsschalter, Trenner (9),
Kurzschließer, Erder (15), Sammelschienen (13) usw.,
hintereinander angeordnet sind, wobei die die Anlagenelemente aufnehmenden Kapselungen (2; 10; 14) durch die
die Leiter der Strombahn führenden, aus Isolierstoff
bestehenden Abstandshalter zugleich abgeschottet sind,
dadurch gekennzeichnet, daß die die Leiterausgänge (6;
6'; 6"; 7; 7'; 7") aus jeder ein Anlagenelement aufnehmenden gasisolierten Kapselung (2; 10; 14) führenden
Abstandshalter als aus einer Feststoffisolation bestehende, in die gasisolierte Kapselung (2; 10; 14) hineinragende Durchführung (3; 4'; 4"; 5; 5'; 5") ausgebildet
und die durch die Durchführungen (4; 4'; 4"; 5; 5'; 5")
geführten Leiterausgänge (6; 6'; 6"; 7; 7'; 7") an den
sich gegenüberstehenden Enden benachbarter gasisolierter
Kapselungen (2; 10; 14) miteinander gefügt sind.

2. Metallgekapselte gasisolierte Schaltanlage nach Patentanspruch 1, bei der die die Leiterausgänge (6; 6'; 6";
7; 7'; 7") der Strombahn führenden Durchführungen (4;
4'; 4"; 5; 5'; 5") durch an sich bekannte, die Leiterausgänge (6; 6'; 6"; 7; 7'; 7") leitend verbindende
Einrichtungen miteinander lösbar verbunden sind.

3. Metallgekapselte gasisolierte Schaltanlage nach Patentanspruch 1 und 2, bei der an den die Leiterausgänge (6;
6'; 6"; 7; 7'; 7") der Strombahn führenden, in die gasisolierten Kapselungen (2; 10; 14) hineinragenden Durchführungen (4; 4'; 4"; 5; 5'; 5") innerhalb einer jeden
gasisolierten Kapselung (2; 10; 14) das jeweilige Anlagenelement bzw. zumindest eine Baugruppe des jeweiligen
Anlagenelementes befestigt ist.

4. Metallgekapselte gasisolierte Schaltanlage nach Patentanspruch 1 bis 3, bei der der Leiterausgang (6") des
im Eingangsteil der metallgekapselten gasisolierten
Schaltanlage angeordneten feststoffisolierten Meßwandlers (18) ebenfalls als aus einer Feststoffisolation bestehende, den Leiter der Strombahn aufnehmende,
in die anschließende gasisolierte Kapselung (14)
hineinragende Durchführung ausgebildet ist.

0190437

Europäisches
Patentamt

**EUROPÄISCHER RECHERCHENBERICHT**

01.90.43.7
Nummer der Anmeldung

EP 85 11 5691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 213 031 (SIEMENS-SCHUCKERTWERKE AG) * Anspruch 1; Spalte 1, Zeile 1 - Spalte 2, Zeile 52; Figur * | 1 | H 02 B 13/02 |
| A | DE-B-1 189 176 (MOSER-GLASER & CO. A.G.) * Spalte 1, Zeilen 1-38; Figur 1 * | 1,2,4 | |
| A | CH-A- 362 450 (MOSER-GLASER & CO. AG) * Seite 1, Zeilen 27-44, 61-65; Figur 1, Anspruch 2 * | 1,3 | |
| A | DE-A-2 754 691 (SIEMENS AG) * Seite 4, Zeile 21 - Seite 5, Zeile 25 * | 1 | RECHERCHIERTE SACHGEBIETE (Int. Cl.4) |
| A,D | DE-C-1 615 857 (BROWN, BOVERI & CIE AG) | | H 02 B 13/02<br>H 01 H 33/00<br>H 01 H 31/00 |

Der vorliegende Recherchenbericht wurde für alle Patentansprüche erstellt.

| Recherchenort BERLIN | Abschlußdatum der Recherche 24-04-1986 | Prüfer RUPPERT W |
|---|---|---|